# EUROPEAN PATENT APPLICATION

(11) **EP 1 496 603 A2**
(43) Date of publication of application: **12.01.2005**
(21) Application number: 04254074.0
(22) Date of filing: 07.07.2004
(51) Int. Cl.: H02K 11/00

(54) **Motor and motor control method**

(30) Priority: 10.07.2003 JP 2003272883
(71) Applicant: FANUC LTD, Minamitsuru-gun, Yamanashi 401-0597 (JP)
(72) Inventor: Yamamoto, Tomonaga, Fujiyoshida-shi Yamanashi 403-0005 (JP); Maeda, Takuya, Room 7-104 FANUC Manshonharimomi, Minamitsuru-gun Yamanashi 401-0511 (JP); Hosoda, Akihiro, FANUC Dai3virakaramatsu, Minamitsuru-gun Yamanashi 401-0511 (JP)
(74) Representative: Billington, Lawrence Emlyn

(57) **Abstract**

A motor (1) is provided with a storage medium (2) for storing test information unique to the motor (1), acquired by tests in the course of the motor manufacturing process. By using test information unique to each individual motor (1), automatic fine adjustment of each motor (1) is made possible.

## Description

### BACKGROUND OF THE INVENTION

### 1. Field of the Invention

The present invention relates to a motor and a motor control method.

### 2. Description of the Related Art

Motors have been proposed to have various functions when they are driven, which include operation function, stop control function, protection function and monitoring function.

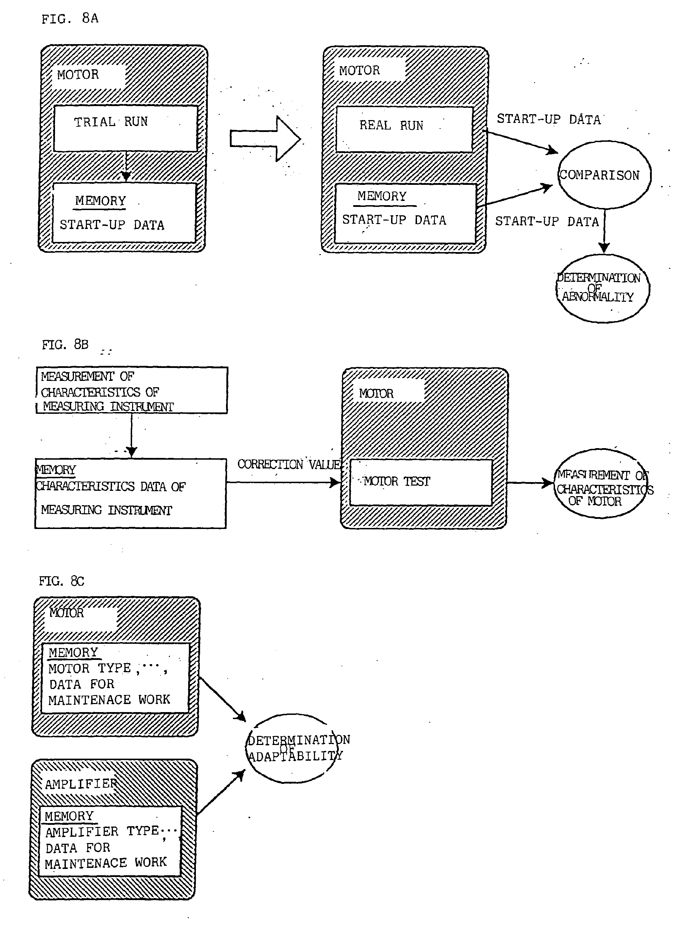

For instance, as shown in FIG. 8A, it is proposed to promptly detect an abnormality of a motor and the load on it by storing data at the time of start of the motor in its trial run and then comparing at the time of actuating the motor in a real run with the stored data and making necessary computations. In this case, data on start of the motor includes, for example, rush current, starting current and warm-up time (see, for example, Japanese Patent Application Laid-Open No. 5-328592).

It is also proposed, as shown in FIG. 8B, to measure a delay in response of a measuring instrument itself and store the measured data prior to test of a motor, and measure and evaluate the characteristics of the motor accurately by compensating for the delay in response of the measurement instrument itself when actually testing the motor, (see, for example, Japanese Patent Application Laid-Open No. 8-75831).

It is further proposed, as shown in FIG. 8C, to store in a storage media, provided on a motor or a serve amplifier for driving the motor, data for identifying the type and characteristics of a motor and or data used for maintenance of the motor, and then determine the adaptability of the motor and a drive amplifier when combining the motor with the drive amplifier (see, for example, Japanese Patent Application Laid-Open No. 10-124131).

Motors are shipped after pre-shipment tests are completed in the course of manufacturing process. In these pre-shipment tests, various tests on rotor phase, winding resistance and other items are carried out and it is judged whether test results are within predetermined acceptable ranges or not.

In any of the forgoing prior art, information on a motor is used to carry out detection of abnormality, evaluation of motor characteristics, and determination of adaptabilities of components. However, there have been problems in that these prior art cannot be applied to fine adjustment in driving any individual motor. In order to control the driving of each individual motor with high accuracy, fine adj ustment depending on the characteristics unique to that particular motor is required. In correcting a torque ripple, for instance, it is necessary to cancel the torque ripple according to the rotor phase which differs from motor to motor. Accordingly, in that case, it is required to detect the rotor phase of each individual motor set in a machine and to carry out correction according to the detected rotor phase.

In the above-mentioned prior art, Japanese Patent Application Laid-Open No. 5-328592, for example, uses data at the time of start-up, while Japanese Patent Application Laid-Open No. 8-75831, for example, uses correction data on measuring system, with the result that such data cannot be obtained until the system in which a motor is incorporated is actuated. In actuating such a system in which a motor is incorporated, it is necessary to detect the characteristics unique to the motor and carry out fine adjustments with manual operation according to the detected result.

Japanese Patent Application Laid-Open No. 10-124131 discloses storing of data for identifying the types and characteristics of a motor and an amplifier, but these data are common to motors of the same type, not representing any information unique to each individual motor. For this reason, even if a motor is adaptable to an amplifier, characteristics unique to the motor have to be detected and fine adjustments have to be done with manual operation according to the detected information as in the above-described cases of the prior art when the system incorporating the motor is to be actuated.

Therefore, there has been a problem in a conventional motor and driving and control of a motor in that the characteristics unique to each individual motor have to be detected and fine adjustments have to be done with manual operation according to the detected information in order to control each motor with high accuracy, but no fine adjustment of each individual motor can be accomplished automatically.

Furthermore, the result of pre-shipment tests only guarantees the performance of a shipped motor referred to in a document such as warrant, so that it may be necessary to carry out fine adjustments with manual operation to incorporate the motor into a system using the result of pre-shipment tests.

### SUMMARY OF THE INVENTION

According to the present invention, each individual motor has test information acquired by tests, such as check of operation, conducted in the course of motor manufacturing process so that it is possible to carry out fine adjustment of each motor automatically using the test information unique to the particular motor, thereby simplifying the work involving the motor.

A motor according to the invention is provided with a storage medium which holds test information unique to the motor acquired in the course of motor manufacturing process. The storage medium can be disposed in a constituent part of the motor, such as the motor body or an encoder part with which the motor is provided.

The drive of the motor may be controlled by a numerical control device on the basis of test information read out from the storage medium.

A motor control method according to the invention uses a numerical control device, and comprises a step of reading out test information unique to a motor stored in a storage medium with which a motor is provided, which has been acquired by a test performed in the course of the motor manufacturing process; a step of correcting instruction signals for the motor on the basis of the read-out test information; and a step of controlling the motor according to the corrected instruction signal.

The test information may include, for instance, torque constant, counter electromotive force, resistance, mechanical time constant, thermal time constant, result of voltage test, result of current test, result of torque test, result of output test, result of no-load test, result of vibration test and result of rotor phase test. According to the present invention, such test information can be acquired from the storage medium with which the motor is provided, therefore, there is no need to detect such test information for each individual motor for performing manual correction based on the detected test information, thereby simplifying the operation.

Where the test information is rotor phase information, a torque correcting instruction which has a phase reverse to that of the torque ripple of the motor is formed on the basis of that rotor phase information, and a torque command signal for the motor is corrected by adding the torque correcting instruction to the torque command. As this eliminates the need to detect such test information on each individual motor for performing manual correction, the work can be simplified.

According to the present invention, the configuration described above makes it possible to perform fine adjustment of each individual motor automatically and thereby simplify the work.

### BRIEF DESCRIPTION OF THE DRAWINGS

The foregoing and other objects of the present invention will become apparent from the following description of the preferred embodiments thereof with reference to the accompanying drawings, in which:
FIG. 1 is a schematic diagram illustrating the steps of acquiring test information, holding the test information in a storage medium and controlling the drive of the motor by using the test information, according to the invention;
FIG.S 2A and 2B are schematic diagrams illustrating the acquisition of test information and the holding the test information in a storage medium, according to the invention;
FIG. 3 is a flow chart showing the acquisition of test information and the holding the test information in a storage medium according to the invention;
FIG. 4 is a schematic diagram illustrating the control of the drive of the motor by using test information according to the invention;
FIG. 5 is a flow chart showing the control of the drive of the motor by using test information according to the invention;
FIG. 6 is a schematic diagram illustrating one example of control of the drive of the motor by using test information according to the invention;
FIG. 7 is a graph illustrating a torque ripple; and
FIGS. 8A to 8C illustrate an example of the prior art using information pertaining to a motor.

### DETAILED DESCRIPTION OF THE PREFERRED EMBODIMENTS

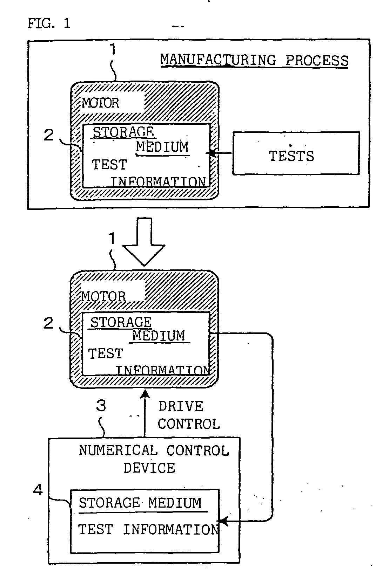

FIG. 1 is a schematic diagram illustrating the steps of acquiring of test information, storing of the acquired test information in a storage medium and controlling of the drive of a motor with a numerical control device by using the test information, according to the invention.

A motor 1 is provided with a storage medium 2. In the manufacturing process of the motor 1, pre-shipment tests are conducted to qualify the product for shipment. By these tests, torque constant, counter electromotive force, resistance, mechanical time constant and thermal time constant, together with various test results including result of voltage test, result of current test, result of torque test, result of output test, result of no-load, result of vibration test and result of rotor phase test are acquired. The acquired test results are stored in the storage medium 2. Either all of the acquired test results or some of them selected as desired are stored in the storage medium 2.

The storage medium 2 can be provided in the body of the motor 1 or the encoder part. The storage medium 2 can be connected to an external device through a connector or the like or can be a non-contact storage medium, such as a wireless tag.

Tests to be conducted in the course of motor manufacturing process may be done at any appropriate stage before shipment, including immediately before shipment. The information acquired by tests can be stored in the storage medium.

With these test, at the time of shipment of the motor 1, test information unique to the motor 1 has been stored in the storage medium 2 so as to be readable.

The motor 1, after it is shipped, constitutes a system together with a numerical control device 3, and the drive of the motor 1 is controlled by the numerical control device 3. The control of the drive of the motor 1 by the numerical control device 3 is accomplished by reading out test information from the storage medium 2 with which the motor 1 is provided, causing the storage medium 4 in the numerical control device 3 to store the test information, and performing correction (fine adjustment) in accordance with each particular motor 1 by using this test information.

The storage medium which stores the test information may either be disposed in the motor body or in an encoder unit with which the motor is provided.

FIG. 2A shows a mode in which the storage medium for storing test information is disposed in the motor body 10. In the test process in a motor manufacturing stage, each individual motor is tested with a testing apparatus 20. After the results of tests are stored in a storage medium 21 on the testing apparatus 20 side, they are written in the storage medium disposed in the motor body 10 to be stored therein.

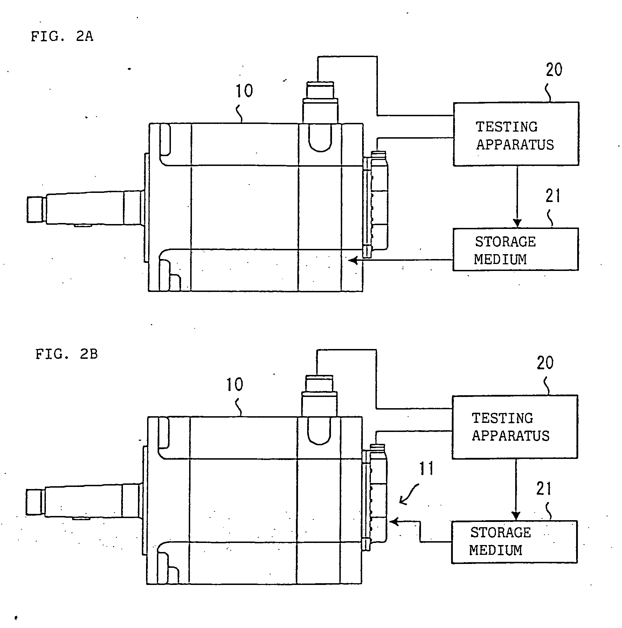

FIG. 2B shows a mode in which the storage medium for storing test information is disposed in an encoder unit 11 with which the motor is provided. In the testing process in a motor manufacturing stage, the test results are written in the storage medium disposed on the encoder unit 11 to be stored therein after each individual motor is tested with the testing apparatus 20 and the results of tests are stored into the storage medium 21 on the testing apparatus 20 side. In the configuration in which the storage medium is disposed in the encoder unit 11, input/output means with which the encoder unit 11 is provided can be concurrently used for writing and reading out the test information.

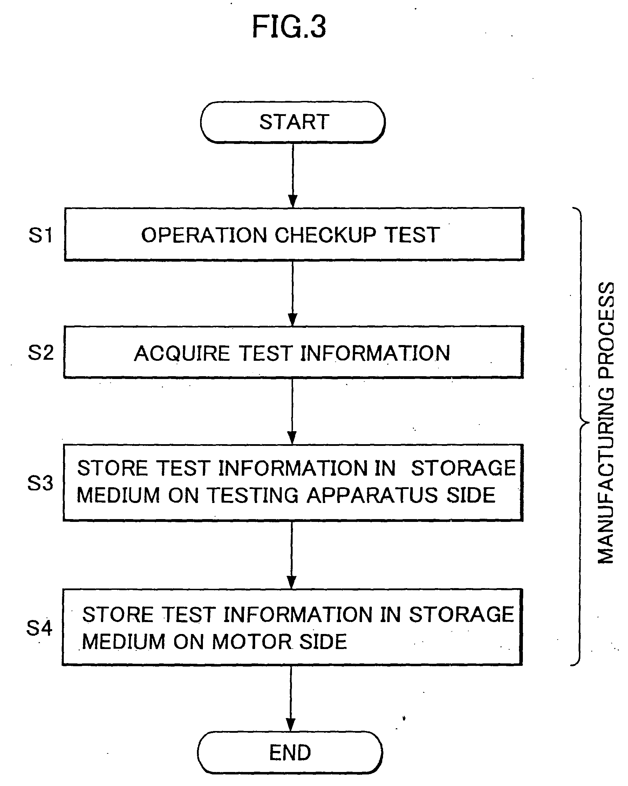

FIG. 3 is a flow chart for showing the manufacturing process. The operation of the motor is tested (step S1) to acquire test information on the motor. The operational tests may be conducted, for instance, immediately before shipping of the motor as pre-shipment tests or at any appropriate time during the manufacturing process, and various test result which may include, for instance, torque constant, counter electromotive force, resistance, mechanical time constant and thermal time constant, together with various test results including result of voltage test, result of current test, result of torque test, result of output test, result of no-load test, result of vibration test, result of rotor phase test and so forth are acquired.

The acquired test information, after being stored once in the storage medium on the testing apparatus side (step S3), is written in the storage medium with which the motor is provided (step S4) to be stored therein.

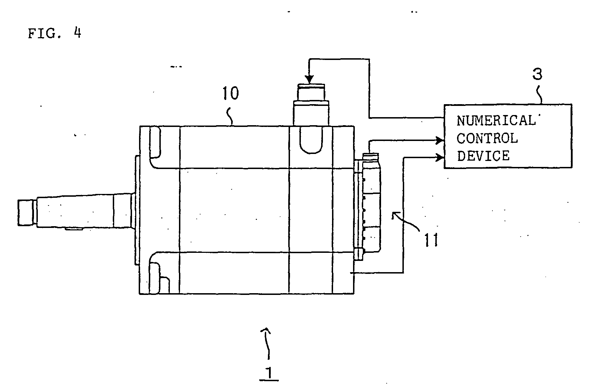

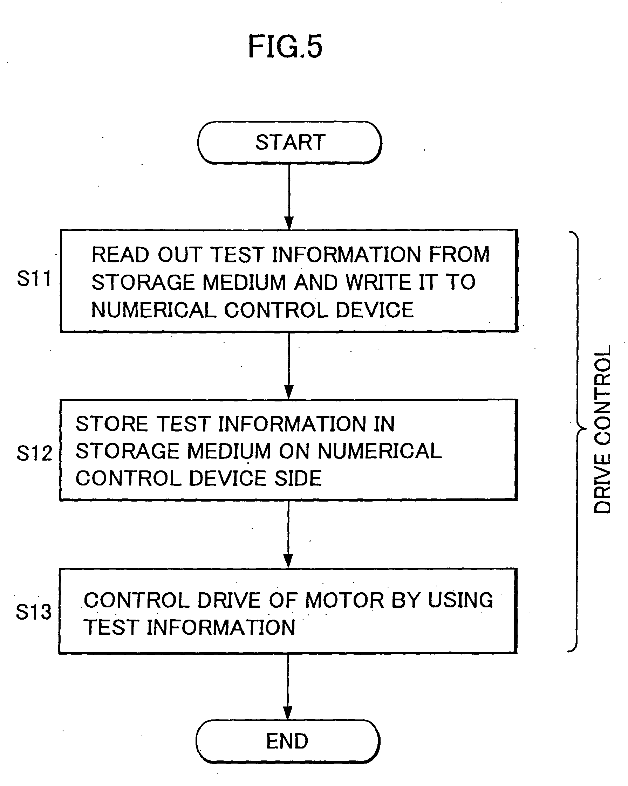

The test information stored in the storage medium of the motor is used for correction of the control of motor operation by being read out to the numerical control device. FIG. 4 and FIG. 5 are a schematic diagram and a flow chart, respectively, for describing the control of drive of the motor by using test information.

The test information is stored in the storage medium disposed in the motor body 10 or the encoder unit 11 of the motor 1. When the numerical control device 3 controls the motor 1 for testing, the numerical control device 3 reads out the test information from the storage medium (step S11) , and writes the read-out test information in the storage medium in the numerical control device 3 for storing (step S12).

The numerical control device 3 controls the drive of the motor 1 and performs fine adjustment by using the test information stored in the storage medium (step S13).

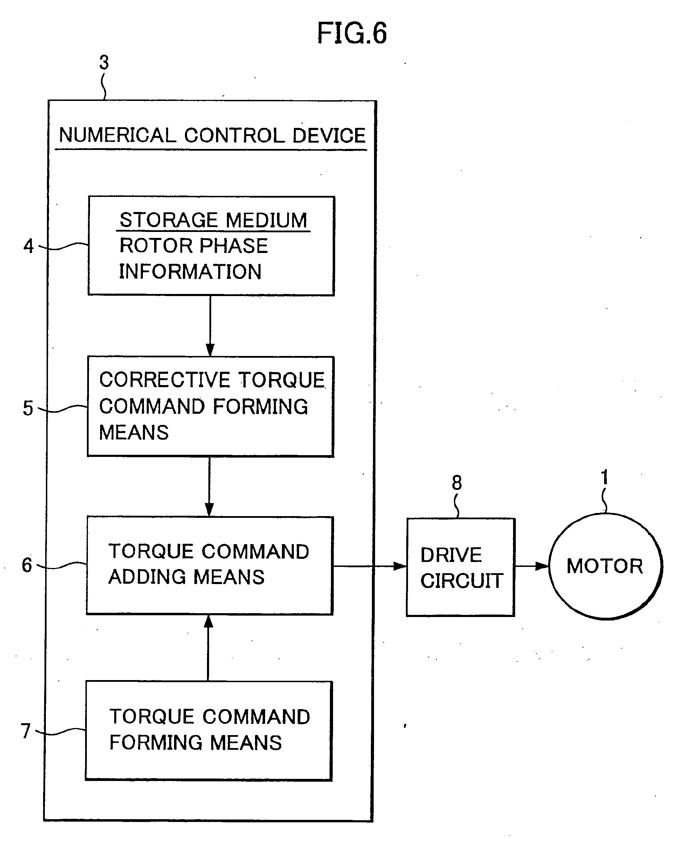

One example of control of drive by using test information will now be described with reference to the schematic diagram of FIG. 6. The example described below is for a case in which a torque ripple is corrected by using rotor phase information held by the motor.

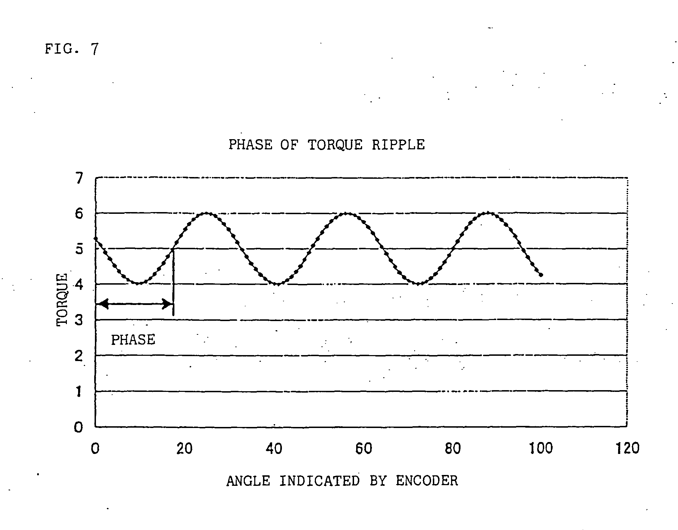

The graph of FIG. 7 shows the relationship between the angle indicated by the encoder and torque variation. Usually, there is a discrepancy between the starting point of a torque ripple (the position where the torque variation is zero) and the origin of the encoder (zero degree indicated by the encoder) , and this discrepancy emerges as a phase discrepancy. This phase discrepancy can be detected by checkup of rotor phase in a test conducted in the course of motor manufacturing process, and is stored in the storage medium of the motor as positional information.

After the motor 1 is installed, the numerical control device 3 reads out rotor phase information from the storage medium of the motor 1 and stores the read-out information in the storage medium 4. The numerical control device 3 usually forms a torque command by means of the torque command forming means 6, and controls the operation of the installed motor 1. To reduce the torque ripple, corrective torque command forming means 5 forms a corrective torque command, which has a reverse phase to cancel the torque ripple, by using the rotor phase information stored in the storage medium 4. Since the rotor phase information includes information on the phase discrepancy unique to each motor, it is possible to form a corrective torque which has a reverse phase with respect to the torque ripple by shifting the rotor phase by as much as this phase discrepancy.

The corrective torque command formed by the corrective torque command forming means 5 and the torque command formed by the torque command forming means 6 are added to each other by the torque command adding means 7. A drive circuit 8 drives the motor according to the added torque commands. The above-described control can be carried out automatically.

As there is no need to detect the rotor phase of each individual motor for correction by controlling the drive of the motor by using the rotor phase information with which each motor is provided, the operation of drive control can be simplified.

Though rotor phase information is taken up as an example of test information to be stored in a storage medium in the above explanation, other type of test information acquired in the course of motor manufacturing process may be stored in the storage medium for automatic correction in controlling the drive of a motor.

The present invention is applicable to any type of motor and to any system into which a motor is incorporated.

## Claims

1. A motor comprising:
a storage medium for storing test information unique to the motor acquired in the course of manufacturing process of said motor.

2. The motor according to Claim 1, wherein said storage medium is disposed in the motor body.

3. The motor according to Claim 1, wherein said storage medium is disposed in the encoder part of the motor.

4. The motor according to Claim 1, wherein a numerical control device controls the drive of said motor based on the test information read out from said storage medium.

5. The motor according to Claim 1, wherein the test information stored in said storage medium includes at least one item out of the torque constant, counter electromotive force, resistance, mechanical time constant and thermal time constant, result of voltage test, result of current test, result of torque test, result of output test, result of no-load test, result of vibration test and result of rotor phase test.

6. A motor control method using a numerical control device comprising:
reading out test information unique to a motor stored in a storage medium with which a motor is provided, which has been acquired by a test performed in the course of the motor manufacturing process;
correcting instruction signals for the motor on the basis of the read-out test information; and
controlling the motor according to the corrected instruction signal

7. The motor control method according to Claim 6, wherein said test information is rotor phase information, a torque correcting instruction which has a reverse phase with respect to a torque ripple is formed based on the rotor phase information, and a torque command signal for the motor is corrected by adding the torque correcting instruction to the torque command.
